(19) Europäisches Patentamt
European Patent Office
Office européen des brevets

(11) **EP 1 364 111 B2**

(12) **NEUE EUROPÄISCHE PATENTSCHRIFT**

(45) Veröffentlichungstag und Bekanntmachung des Hinweises auf die Entscheidung über den Einspruch:
**22.11.2006 Patentblatt 2006/47**

(45) Hinweis auf die Patenterteilung:
**29.12.2004 Patentblatt 2004/53**

(21) Anmeldenummer: **02708229.6**

(22) Anmeldetag: **09.02.2002**

(51) Int Cl.:
*F01N 11/00* (2006.01)     *F02D 41/06* (2006.01)

(86) Internationale Anmeldenummer:
**PCT/DE2002/000479**

(87) Internationale Veröffentlichungsnummer:
**WO 2002/066803 (29.08.2002 Gazette 2002/35)**

(54) **VERFAHREN ZUR ON-BOARD ERMITTLUNG EINER TEMPERATURGRÖSSE**

METHOD FOR ON-BOARD DETECTING A TEMPERATURE VARIABLE

PROCEDE PERMETTANT DE DETERMINER "ON-BORAD" UNE GRANDEUR DE TEMPERATURE

(84) Benannte Vertragsstaaten:
**DE FR GB IT SE**

(30) Priorität: **21.02.2001 DE 10108182**

(43) Veröffentlichungstag der Anmeldung:
**26.11.2003 Patentblatt 2003/48**

(73) Patentinhaber: **ROBERT BOSCH GMBH**
**70442 Stuttgart (DE)**

(72) Erfinder:
• **PLOTE, Holger**
  **4017 Linz (AT)**
• **KRAUTTER, Andreas**
  **71711 Steinheim (DE)**
• **WALTER, Michael**
  **70806 Kornwestheim (DE)**

(56) Entgegenhaltungen:
EP-A- 0 626 507     EP-A- 0 978 640
EP-B- 0 756 071     DE-A- 4 338 342
DE-A- 19 506 983     DE-A- 19 836 955
DE-A- 19 907 382

EP 1 364 111 B2

## Beschreibung

Stand der Technik

Die Erfindung geht aus von einem Verfahren zur Ermittlung der Temperatur eines Abgasnachbehandlungssystems und/oder der Abgastemperatur nach dem Abgasnachbehandlungssystem nach der Gattung des unabhängigen Anspruchs.

Zur Steuerung und/oder Überwachung von Abgasnachbehandlungssystemen ist die genaue Kenntnis des Zustandes, insbesondere des Strömungszustandes, im Abgasnachbehandlungssystem erforderlich. Dieser Zustand ist insbesondere durch die Temperatur im Abgasnachbehandlungssystem bestimmt. Diese Temperatur ist aber nur mit sehr hohem Aufwand präzise erfassbar.

Ein bekanntes Verfahren zur Steuerung von Abgasnachbehandlungsystemen ist beispielsweise in DE 4 338 342 offenbart.

Vorteile der Erfindung

Das erfindungsgemäße Verfahren ermöglicht eine zuverlässige on-board-Ermittlung der Temperatur des Abgasnachbehandlungssystems und/oder der Abgastemperatur nach dem Abgasnachbehandlungssystem, bei welchem sowohl die gemessene als auch die berechnete Temperatur des Abgasnachbehandlungssystems und/oder des Abgases stromabwärts nach dem Abgasnachbehandlungssystem sowie die Abgastemperatur stromaufwärts vor dem Abgasnachbehandlungssystem berücksichtigt werden, wobei die Berechnung der Temperatur des Abgasnachbehandlungssystems und/oder der Temperatur des Abgases stromabwärts nach dem Abgasnachbehandlungssystem anhand einer Größe, welche den Abgasmassenstrom im Abgasnachbehandlungssystem charakterisiert, und der Abgastemperatur stromaufwärts vor dem Abgasnachbehandlungssystem erfolgt. Das erfindungsgemäße Verfahren sieht weiterhin einen Vergleich der Differenz zwischen der berechneten und der gemessenen Temperatur mit einem Schwellenwert vor. Bei einer Überschreitung des Schwellenwerts wird auf einen Fehler erkannt.

Die erfindungsgemäße Vorgehensweise ist dabei nicht auf Partikelfilter beschränkt, sie kann bei allen Abgasnachbehandlungssystemen verwendet werden. Dies gilt insbesondere auch für alle Arten von Katalysatoren.

Auf der Grundlage der zuverlässig ermittelten Temperatur ist eine schnelle Erkennung des Zustandes eines Partikelfilters möglich. Insbesondere kann der Beladungsgrad eines Partikelfilters oder ein Defekt eines Partikelfilters deutlich schneller erkannt werden. Aufgrund der früheren Erkennung des Zustandes ist eine genaue Steuerung, Regelung und/oder Überwachung des Abgasnachbehandlungssystems möglich.

Besonders vorteilhaft ist es, wenn die Größe, die den Massenstrom im Abgasnachbehandlungssystem charakterisiert, ausgehend von einer Luftgröße, die die der Brennkraftmaschine zugeführte Luftmenge charakterisiert, und/oder einer Kraftstoffgröße, die die der Brennkraftmaschine zugeführte Kraftstoffmasse charakterisiert, bestimmt wird. Dadurch kann diese Größe sehr einfach und präzise ermittelt werden, ohne dass ein zusätzlicher Sensor erforderlich ist. Die Luftgröße steht in der Steuereinheit üblicherweise zur Verfügung, da diese auch zur Steuerung der Brennkraftmaschine, insbesondere der eingespritzten Kraftstoffmenge und/oder der Luftmenge, verwendet wird. Üblicherweise wird diese Größe mittels eines Sensors in der Ansaugleitung der Brennkraftmaschine gemessen. Bei der Kraftstoffgröße handelt es sich ebenfalls um eine Größe, die im Steuergerät vorliegt. Beispielsweise kann hier eine vom Momentenwunsch abgeleitete Größe und/oder eine von dem Ansteuersignal eines mengenbestimmenden Stellglieds abgeleitete Größe verwendet werden.

Vorzugsweise wird mit der Vorgehensweise die Temperatur des Abgasnachbehandlungssystems und/oder die Temperatur der Gase nach dem Abgasnachbehandlungssystem bestimmt.

Die erfindungsgemäße Vorgehensweise ist vorzugsweise für Abgasnachbehandlungssysteme geeignet, die wenigstens einen Partikelfilter beinhalten. Wobei neben dem Partikelfilter weitere Systeme vorhanden sein können, die zur Behandlung des Abgases dienen.

Besonders vorteilhaft ist es, wenn die ermittelten Temperaturen lediglich in bestimmten Zuständen, wie beispielsweise in dynamischen Zuständen, zur Steuerung und/oder Regelung des Abgasnachbehandlungssystems verwendet wird.

Ferner ist es vorteilhaft, wenn die ermittelte Temperatur, zur Fehlerüberwachung verwendet wird. Vorzugsweise kann vorgesehen sein, dass die gemessenen Werte der Temperatur mit den berechneten Werten verglichen und ausgehend von diesem Vergleich auf Fehler erkannt wird.

Vorteilhafte und zweckmäßige Ausgestaltungen und Weiterbildungen der Erfindung sind in den Unteransprüchen gekennzeichnet.

Zeichnung

Die Erfindung wird nachstehend anhand der in der Zeichnung dargestellten Ausführungsformen erläutert. Es zeigen Figur 1 ein Block-Diagramm eines Abgasnachbehandlungssystems, die Figur 2 ein Diagramm der erfindungsgemäßen Vorgehensweise und Figur 3 ein Ablauf-Diagramm der Vorgehensweise.

Beschreibung der Ausführungsbeispiele

Im folgenden wird die erfindungsgemäße Vorgehensweise am Beispiel eines Partikelfilters beschrieben. Die erfindungsgemäße Vorgehensweise ist dabei nicht auf die Anwendung bei einem Partikelfilter beschränkt, sie kann auch bei anderen Abgasnachbehandlungssystemen, insbesondere bei Katalysatoren eingesetzt werden.

Beschreibung der Ausführungsbeispiele

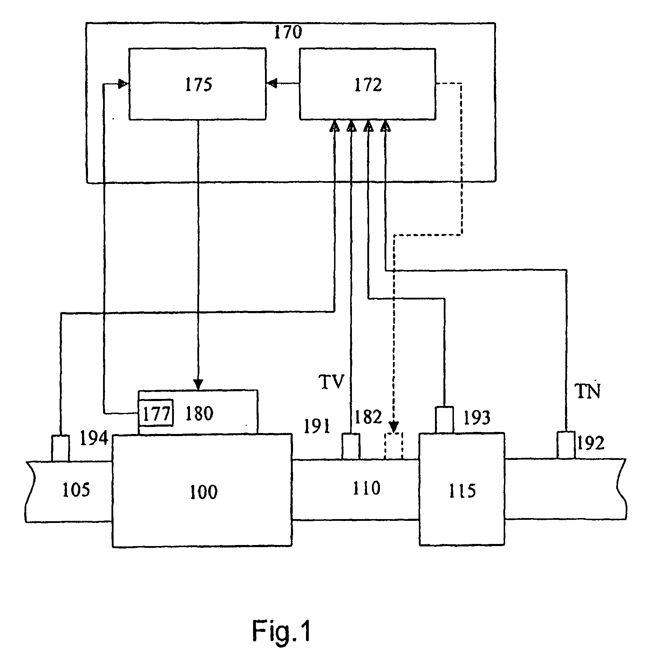

In Figur 1 sind die wesentlichen Elemente eines Abgasnachbehandlungssystems einer Brennkraftmaschine dargestellt. Die Brennkraftmaschine ist mit 100 bezeichnet. Ihr wird über eine Frischluftleitung 105 Frischluft zugeführt. Die Abgase der Brennkraftmaschine 100 gelangen über eine Abgasleitung 110 in die Umgebung. In der Abgasleitung ist ein Abgasnachbehandlungssystem 115 angeordnet. Hierbei kann es sich um einen Katalysator und/oder um eine Partikelfilter handeln. Desweiteren ist es möglich, dass mehrere Katalysatoren für unterschiedliche Schadstoffe oder Kombinationen von wenigstens einem Katalysator und einem Partikelfilter vorgesehen sind.

Desweiteren ist eine Steuereinheit 170 vorgesehen, die wenigstens eine Motorsteuereinheit 175 und eine Abgasnachbehandlungssteuereinheit 172 umfaßt. Die Motorsteuereinheit 175 beaufschlagt ein Kraftstoffzumesssystem 180 mit Ansteuersignalen. Die Abgasnachbehandlungssteuereinheit 172 beaufschlagt die Motorsteuereinheit 175 und bei einer Ausgestaltung ein Stellelement 182, das in der Abgasleitung vor dem Abgasnachbehandlungssystem oder im Abgasnachbehandlungssystem angeordnet ist, mit Ansteuersignalen.

Desweiteren können verschiedene Sensoren vorgesehen sein, die die Abgasnachbehandlungssteuereinheit und die Motorsteuereinheit mit Signalen versorgen. So ist wenigsten ein erster Sensor 194 vorgesehen, der Signale liefert, die den Zustand der Luft charakterisiert, die der Brennkraftmaschine zugeführt wird. Ein zweiter Sensor 177 liefert Signale, die den Zustand des Kraftstoffzumesssystems 180 charakterisieren. Wenigsten ein dritter Sensor 191 liefert Signale, die den Zustand des Abgases vor dem Abgasnachbehandlungssystem charakterisieren. Wenigstens ein vierter Sensor 193 liefert Signale, die den Zustand des Abgasnachbehandlungssystems 115 charakterisieren.

Desweiteren kann wenigstens ein Sensor 192 Signale liefern, die den Zustand der Abgase nach dem Abgasnachbehandlungssystem charakterisieren. Vorzugsweise werden Sensoren, die Temperaturwerte und/oder Druckwerte erfassen verwendet.

Bei der im folgenden beschriebenen Ausführungsform ist der Sensor 191 als Temperatursensor ausgebildet. Dieser Sensor liefert ein Signal TV, das die Temperatur vor dem Abgasnachbehandlungssystem charakterisiert. Der Sensor 192 als Temperatursensor ausgebildet. Dieser Sensor 192 liefert ein Signal TN, das die Temperatur nach dem Abgasnachbehandlungssystem charakterisiert. Dieses Signal TN kann auch ausgehend von anderen Größen berechnet werden.

Mit den Ausgangssignalen des ersten Sensors 194, des dritten Sensors 191, des vierten Sensors 193 und des fünften Sensors 192 wird vorzugsweise die Abgasnachbehandlungssteuereinheit 172 beaufschlagt. Mit den Ausgangssignalen des zweiten Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgebungs- oder Motorbetriebszustände charakterisieren.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Die erfindungsgemäße Vorgehensweise wird vorzugsweise zur Steuerung von Brennkraftmaschinen, insbesondere bei Brennkraftmaschinen mit einem Abgasnachbehandlungssystem, eingesetzt. Insbesondere kann sie eingesetzt werden, bei Abgasnachbehandlungssystemen, bei denen ein Katalysator und ein Partikelfilter kombiniert sind. Desweiteren ist sie einsetzbar, bei Systemen die lediglich mit einem Katalysator ausgestattet sind.

Ausgehend von den vorliegenden Sensorsignalen berechnet die Motorsteuerung 175 Ansteuersignale zur Beaufschlagung des Kraftstoffzumesssystems 180. Dieses mißt dann die entsprechende Kraftstoffmenge der Brennkraftmaschine 100 zu. Bei der Verbrennung können im Abgas Partikel entstehen. Diese werden von dem Partikelfilter im Abgasnachbehandlungssystem 115 aufgenommen. Im Laufe des Betriebs sammeln sich in dem Partikelfilter 115 entsprechende Mengen von Partikeln an. Dies führt zu einer Beeinträchtigung der Funktionsweise des Partikelfilters und/oder der Brennkraftmaschine. Deshalb ist vorgesehen, dass in bestimmten Abständen bzw. wenn der Partikelfilter einen bestimmten Beladungszustand erreicht hat, ein Regenerationsvorgang eingeleitet wird. Diese Regeneration kann auch als Sonderbetrieb bezeichnet werden.

Der Beladungszustand wird bspw. ausgehend von verschiedenen Sensorsignalen erkannt. So kann zum einen der Differenzdruck zwischen dem Eingang und dem Ausgang des Partikelfilters 115 ausgewertet werden. Zum anderen ist es möglich den Beladungszustand ausgehend von verschiedenen Temperatur und/oder verschiedenen Druckwerten zu ermitteln. Desweiteren können noch weitere Größen zur Berechnung oder Simulation des Beladungszustands herangezogen werden. Eine entsprechende Vorgehensweise ist bspw. aus der DE 199 06 287 bekannt.

Erkennt die Abgasnachbehandlungssteuereinheit, dass der Partikelfilter einen bestimmten Beladungszustand erreicht hat, so wird die Regeneration initialisiert. Zur Regeneration des Partikelfilters stehen verschiedene Möglichkeiten zur Verfügung. So kann zum einen vorgesehen sein, dass bestimmte Stoffe über das Stellelement 182 dem Abgas zugeführt werden, die dann eine entsprechende Reaktion im Abgasnachbehandlungssystem 115 hervorrufen. Diese zusätzlich zugemessenen Stoffe bewirken unter anderem eine Temperaturerhöhung und/oder eine Oxidation der Partikel im Partikelfilter. So kann bspw. vorgesehen sein, dass mittels des Stellelements 182 Kraftstoffstoff und/oder Oxidationsmittel zugeführt werden.

Bei einer Ausgestaltung kann vorgesehen sein, dass ein entsprechendes Signal an die Motorsteuereinheit 175 übermittelt wird und diese eine so genannte Nacheinspritzung durchführt. Mittels der Nacheinspritzung ist es möglich, gezielt Kohlenwasserstoffe in das Abgas einzubringen, die über eine Temperaturerhöhung zur Regeneration des Abgasnachbehandlungssystems 115 beitragen.

Üblicherweise ist vorgesehen, dass der Beladungszustand ausgehend von verschiedenen Größen bestimmt wird. Durch Vergleich mit einem Schwellwert werden die unterschiedlichen Zustände erkannt und abhängig vom erkannten Beladungszustand die Regeneration eingeleitet.

Erfindungsgemäß wird das dynamische Temperaturverhalten des Partikelfilters modelliert. Das Modell der Temperatur TF des Partikelfilters stützt sich im wesentlichen auf die Temperatur TV des Abgasstromes vor dem Partikelfilter 115. Diese wird für eine Wärmebilanzrechnung des Partikelfilters herangezogen. Die Bilanz der zu- bzw. abfließenden Wärmeströme ergibt den Zusammenhang:

$$TF = \frac{1}{CPF}\int M^* CPA^*(TV-TN)^* dt$$

Dabei charakterisiert die Größe $C_{PF}$ die Wärmekapazität des Filters, die Größe $C_{PA}$ stellt die spezifische Wärmekapazität des Abgasmassenstroms dar. Der Abgasmassenstrom M wird vorzugsweise aus anderen bekannten Größen wie beispielsweise der Luftmasse, die mittels des Sensors 194 gemessen wird und der Kraftstoffmasse QK, die von der Motorsteuereinheit 175 bereitgestellt wird, berechnet werden. Anstelle dieser Größen können auch entsprechende Ersatzgrößen wie die Ansteuerdauer eines mengenbestimmenden Stellglieds oder das Ansteuersignal eines mengenbestimmenden Stellgliedes verwendet werden. Die Größe TN entspricht der Temperatur nach dem Filter. Wird zur Bestimmung der Temperatur TN nach dem Abgas nach dem Abgasnachbehandlungssystem kein Sensor 192 verwendet, so wird die Temperatur TN vorzugsweise gemäss der folgenden Formel ermittelt.

$$TN = TF^* BF + TV^*(1 - BF)$$

Bei der ersten Berechnung wird hierbei ein Initialisierungswert für die Temperatur TF vorgegeben. Vorzugsweise wird hierzu die beim Einschalten gemessene Temperatur TV oder ein anderer Temperaturwert als Startwert verwendet. In der nächsten Berechnung wird die Temperatur TF aus dem vorangegangenen Rechenschritt verwendet. Dies ist möglich, da sich die Temperatur des Filters wesentlich langsamer ändert als die Rechenzeit eines Programmdurchlaufs. Bei der Größe BF handelt es sich um eine Größe, welche den Teil des Abgasstromes charakterisiert, der am Wärmeaustausch mit dem Filter beteiligt ist. Die Größe 1-BF charakterisiert den Teil des Abgasstromes, welcher ohne Wärmeaustausch den Filter passiert.

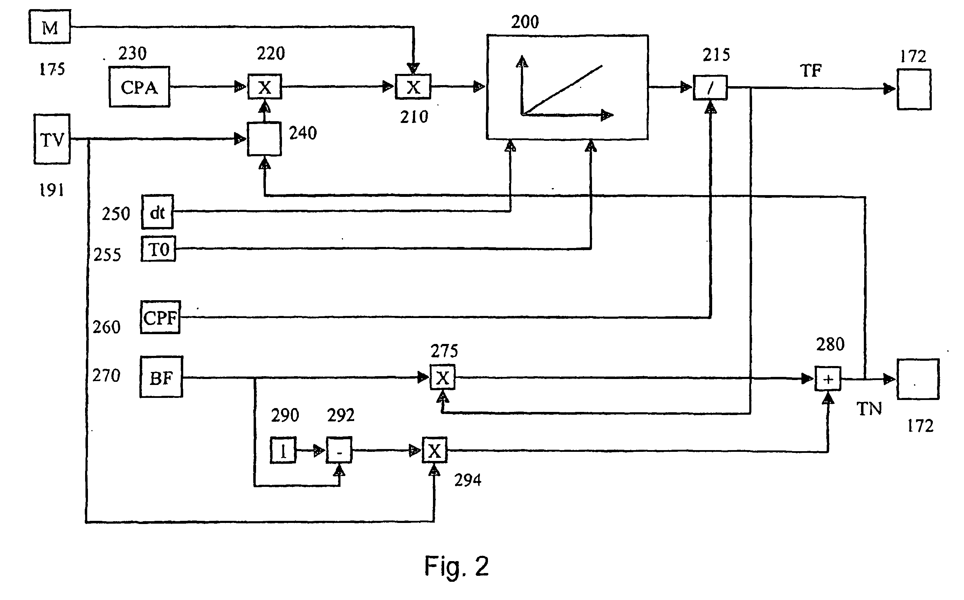

Eine entsprechende Vorgehensweise ist in Figur 2 dargestellt.

Bereits in Figur 1 beschriebene Elemente sind in Figur 2 mit entsprechenden Bezugszeichen bezeichnet. Ein Integrator, der im wesentlichen eine Integration der Größen gemäss der obigen Formel vornimmt, ist mit 200 bezeichnet. Diesem wird das Ausgangssignal eines Multiplikationspunktes 210 zugeleitet. An dessen Eingang liegt zum einen die Größe M, die den Abgasmassenstrom, der die Brennkraftmaschine verlässt, charakterisiert. Am zweiten Eingang des Verknüpfungspunktes 210 liegt das Ausgangssignal eines weiteren Multiplikationspunktes 220, der das Ausgangssignal CPA einer Wertevorgabe 230 zuführt. Am zweiten Eingang des Multiplikationspunktes 220 liegt das Ausgangssignal eines Subtraktionspunkt 240 an. An dem Subtraktionspunkt 240 liegt zum einen das Ausgangssignal TV des Sensors 191 und das Ausgangssignal TN eines Verknüpfungspunktes 280 an.

Dem Integrator 200 werden ferner die Ausgangssignale dt einer Wertevorgabe 250 zugeleitet, die verschiedene Integratorkonstanten beinhaltet. Ferner wird dem Integrator 200 das Ausgangssignal T0 einer Startwertvorgabe 255 zugeleitet, in der der Startwert der Integration abgelegt ist.

Der Integrator 200 beaufschlagt eine Division 215 mit einem Signal, an dessen zweiten Eingang das Ausgangssignal CPF einer Wertevorgabe 260 vorliegt, die das Signal CPF bereitstellt. Am Ausgang der Division liegt das Signal TF an, das die Filtertemperatur charakterisiert. Dies wird zum einen einer Steuereinheit 170 und insbesondere der Abgasnachbehandlungssteuereinheit 172 bereitgestellt. Des weiteren gelangt das Signal TF zu einer Multiplikation 275, an dessen weiteren Eingang das Signal BF der Signalvorgabe 270 anliegt. Mit dem Ausgangssignal der Multiplikation 275 wird der Additionspunkt 280 beaufschlagt. Am Additionspunkt 280 liegt ferner das Ausgangssignal der Multiplikation 294 an, der wiederum an das Ausgangssignal TV des Sensors 191 sowie das Ausgangssignal einer Subtraktionspunkt 292 anliegt. Die die Differenz zwischen einem Konstantwert 1 und der Größe BF bildet. Die in Figur 2 dargestellte Struktur bildet die oben angegebenen Formeln nach.

Erfindungsgemäß wird die Temperatur TF des Abgasnachbehandlungssystems bzw. die Temperatur der Abgase im Abgasnachbehandlungssystem sowie die Temperatur TN nach dem Abgasnachbehandlungssystem ausgehend von einer Größe berechnet, die den Massenstrom im Abgasnachbehandlungssystem charakterisieren und einerzweiten Temperatur, die die Temperatur vor dem Abgasnachbehandlungssystem charakterisiert. Der Massenstrom wird dabei wiederum ausgehend von der Luftmasse und von der Kraftstoffmasse, die der Brennkraftmaschine zugeführt werden, bestimmt. Anstelle der Luftmasse und der Kraftstoffmasse können auch andere diese Größen charakterisierenden Größen verwendet werden. Anstelle der Temperatur TF im Abgasnachbehandlungssystem und der Temperatur TN nach dem Abgasnachbehandlungssystem können auch andere Temperaturgrößen in entsprechenderweise bestimmt werden.

Erfindungsgemäß werden die so berechneten Temperaturgrößen TF und/oder TN zur Steuerung des Abgasnachbehandlungssystems verwendet. Dadurch können beispielsweise die Sensoren 192, 193 eingespart werden.

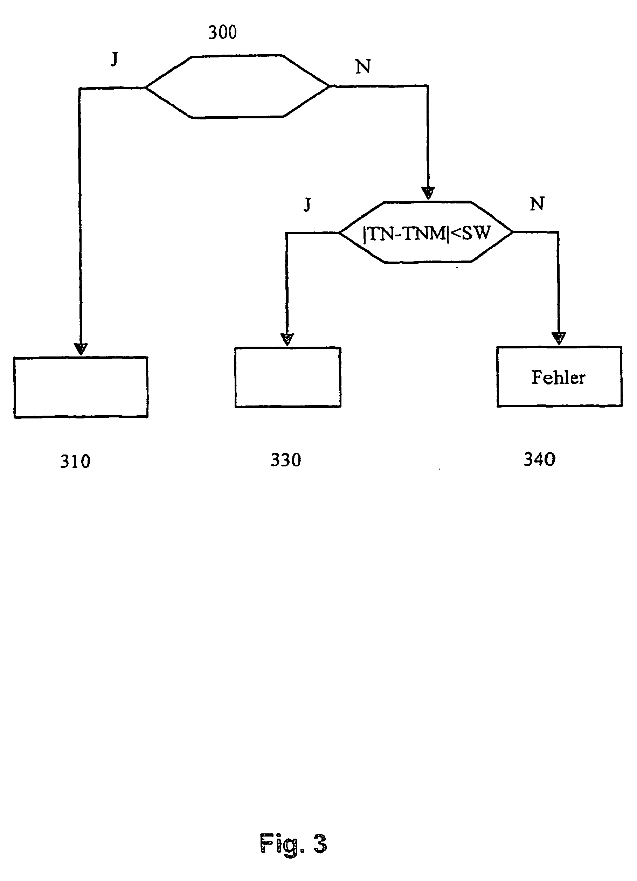

Besonders vorteilhaft ist es, wenn die berechneten Größen lediglich in bestimmten Betriebszuständen verwendet werden. Eine entsprechende Vorgehensweise ist in Figur 3 dargestellt. In Schritt 300 wird überprüft, ob ein Betriebszustand vorliegt, in dem es angebracht ist, die berechneten Größen anstelle der Meßgrößen zu verwenden. Solche Betriebszustände liegen insbesondere in dynamischen Zuständen, in denen sich bestimmte Betriebsparameter schnell ändern, vor. So kann beispielsweise vorgesehen sein, dass überprüft wird, ob die Änderung der Fahrerwunsches, der eingespritzten Kraftstoffmenge der Drehzahl und/oder der Frischluftmenge größer als ein Schwellwert ist. Ist dies der Fall, d.h. es liegt ein solcher dynamischer Zustand vor, so erfolgt in Schritt 310 die Steuerung des Abgasnachbehandlungssystems abhängig von der berechneten Temperatur.

Ergibt die Abfrage 300 dass kein solcher Zustand vorliegt, so wird in Schritt 310 überprüft, ob der Betrag der Differenz der simulierten Temperaturen TN und/oder TF und der gemessenen Temperatur TN und/oder TF kleiner als ein Schwellwert ist. Ist dies der Fall, so wird die gemessene Temperatur in Schritt 330 zur Steuerung der Brennkraftmaschine und/oder des Abgasnachbehandlungssystems verwendet. Ist dies nicht der Fall, d.h. die gemessene und die simulierte Temperatur weichen wesentlich voneinander ab, so wird in Schritt 340 auf Fehler erkannt.

Bei einer erfindungsgemäßen Ausgestaltung kann auch vorgesehen sein, dass zur Steuerung immer die gemessenen Temperaturen und die simulierten nur zur Fehlererkennung verwendet werden.

### Patentansprüche

1. Verfahren zur on-board-Ermittlung der Temperatur (TF) eines Abgasnachbehandlungssystems (115) einer Brennkraftmaschine (100) und/oder der Abgastemperatur (TN) nach dem Abgasnachbehandlungssystem (115), bei welchem von einer Temperatur (TV), welche die Abgastemperatur vor dem Abgasnachbehandlungssystem (110) charakterisiert, und bei welchem von einer von einem Temperatursensor (192, 193) gemessenen Temperatur (TF) des Abgasnachbehandlungssystems (115) und/oder Temperatur (TN) des Abgases nach dem Abgasnachbehandlungssystem (115), sowie bei welchem von einer auf der Grundlage des Abgasmassenstroms und der Temperatur (TV) vor dem Abgasnachbehandlungssystem (115) berechneten Temperatur (TF) des Abgasnachbehandlungssystems (115) und/oder Temperatur (TN) des Abgases nach dem Abgasnachbehandlungssystem (115) ausgegangen wird, **dadurch gekennzeichnet, dass** die Differenz zwischen der berechneten und der gemessenen Temperatur (TF, TN) mit einem Schwellenwert verglichen wird und dass bei einer Überschreitung des Schwellenwerts auf einen Fehler erkannt wird.

2. Verfahren nach Anspruch 1, **dadurch gekennzeichnet, dass** die Größe, die den Massenstrom im Abgasnachbehandlungssystem (115) charakterisiert, ausgehend von einer Luftgröße, welche die der Brennkraftmaschine (100) zugeführte Luftgemenge charakterisiert, und/oder einer Kraftstoffgröße, welche die der Brennkraftmaschine (100) zugeführte Kraftstoffmasse charakterisiert, bestimmt wird.

3. Verfahren nach Anspruch 1 und 2, **dadurch gekennzeichnet, dass** die berechnete Temperatur (TN, TF) insbesondere im dynamischen Zuständen der Brennkraftmaschine (100) zur Steuerung/Regelung des Abgasnachbehandlungssystems (115) verwendet wird.

4. Verfahren nach einem dervorhergehenden Ansprüche, **dadurch gekennzeichnet, dass** das Verfahren zur Berechnung der Temperatur (TF) eines im Abgasnachbehandlungssystem (115) enthaltenen Partikelfilters vorgesehen ist.

5. Verfahren nach einem dervorhergehenden Ansprüche, **dadurch gekennzeichnet, dass** die zweite Temperatur (TV) von einem Temperatursensor (191) gemessen wird.

### Claims

1. Method for on-board detection of the temperature (TF) of an exhaust gas post-treatment system (115) of an internal combustion engine (100) and/or the exhaust gas temperature (TN) downstream of the exhaust gas post-treatment system (115), in which the method is based on a temperature (TV) which characterizes the exhaust gas temperature upstream of the exhaust gas post-treatment system (115), and in which the method is based on the temperature (TF) of the exhaust gas post-treatment system (115) and/or the exhaust gas temperature (TN) downstream of the exhaust gas post-treatment system (115) measured by a temperature sensor (192, 193), and in which the method is based on a temperature (TF) of the exhaust gas post-treatment system (115) and/or the exhaust gas temperature (TN) downstream of the exhaust gas post-treatment system (115) calculated on the basis of the exhaust gas mass flow rate and the temperature (TV), **characterized in that** the difference between the calculated temperature and the measured temperature (TF, TN) is compared with a threshold value, and **in that** a fault is detected when the threshold value is exceeded.

2. Method according to Claim 1, **characterized in that** the variable which characterizes the mass flow rate in the exhaust gas post-treatment system (115) is determined on the basis of an air variable which characterizes the quantity of air fed to the internal combustion engine (100), and/or a fuel variable which characterizes the mass flow rate of the fuel which is fed to the internal combustion engine (100).

3. Method according to Claim 1 and 2, **characterized in that** the calculated temperature (TN, TF) is used in particular for controlling the exhaust gas post-treatment system (115) in the dynamic states of the internal combustion engine (100).

4. Method according to one of the preceding claims, **characterized in that** the method is provided for calculating the temperature (TF) of a particle filter which is contained in the exhaust gas post-treatment system (115).

5. Method according to one of the preceding claims, **characterized in that** the second temperature (TV) is measured by a temperature sensor (191).

## Revendications

1. Procédé pour déterminer de manière embarquée la température (TF) d'un système de post-traitement des gaz d'échappement (115) d'un moteur à combustion interne (100) et/ou la température des gaz d'échappement (TN) en aval du système de post-traitement des gaz d'échappement (115), selon lequel on prend pour base une grandeur qui caractérise le débit massique des gaz d'échappement dans le système de post-traitement des gaz d'échappement (115), ainsi qu'une température (TV) qui caractérise la température des gaz d'échappement en amont du système de post-traitement des gaz d'échappement (115), une température (TF) du système de post-traitement des gaz d'échappement (115) mesurée par un capteur de température (192, 193), et/ou température des gaz d'échappement (TN) mesurée en aval du système de post-traitement des gaz d'échappement (115), ainsi qu'une température (TF) du système de post-traitement des gaz d'échappement (115) et/ou température des gaz d'échappement (TN) en aval du système de post-traitement des gaz d'échappement (115) calculées sur la base du débit massique des gaz d'échappement et de la température (TV), en amont des gaz d'échappement, en aval du post-traitement (115) **caractérisé en ce qu'** on compare la différence entre la température calculée et la température mesurée (TF, TM) à une valeur de seuil et lorsque la valeur de seuil est franchie, on estime qu'il y a un défaut.

2. Procédé selon la revendication 1, **caractérisé en ce qu'** on détermine la grandeur qui caractérise le débit massique circulant dans le système de post-traitement des gaz d'échappement (115) en se basant sur une grandeur d'air qui caractérise la quantité d'air acheminée au moteur à combustion interne (100) et/ou sur une grandeur de carburant qui caractérise la masse de carburant acheminée au moteur à combustion interne (100).

3. Procédé selon la revendication 1 ou 2, **caractérisé en ce que** la température calculée (TN, TF) est utilisée pour la commande/régulation du système de post-traitement des gaz d'échappement (115), en particulier dans les états dynamiques du moteur à combustion interne (100).

4. Procédé selon une des revendications précédentes, **caractérisé en ce qu'** on calcule la température (TF) d'un filtre à particules contenu dans le système de post-traitement des gaz d'échappement (115).

5. Procédé selon une des revendications précédentes, **caractérisé en ce que** la deuxième température (TV) est mesurée par un capteur de température (191).

Fig.1

Fig. 2

300

J           N

J      |TN-TNM|<SW      N

Fehler

310                330                340

Fig. 3